# EUROPÄISCHE PATENTSCHRIFT

(11) **EP 1 555 083 B1**
(45) Veröffentlichungstag und Bekanntmachung des Hinweises auf die Patenterteilung: **15.06.2011**
(21) Anmeldenummer: 04090273.6
(22) Anmeldetag: 07.07.2004
(51) Int. Cl.: B23K 26/10

(54) **Laserbearbeitungsoptik mit Andruckfinger**
Laser machining optics with pressure finger
Optique d'usinage laser avec doigt de pressage

(30) Priorität: 31.12.2003 EP 03090457; 27.05.2004 DE 102004027345; 01.07.2004 EP 04090268
(43) Veröffentlichungstag der Anmeldung: 20.07.2005
(73) Patentinhaber: Highyag Lasertechnologie GmbH, 14532 Stahnsdorf (DE)
(72) Erfinder: Wedel, Björn, 12205 Berlin (DE)
(74) Vertreter: Spieker, Oliver

(56) Entgegenhaltungen:
- EP-A- 1 384 550
- DE-A1- 4 403 999
- DE-A1- 10 042 538
- DE-A1- 10 053 789
- DE-A1- 10 112 744
- DE-A1- 10 116 402
- US-A- 5 194 710
- US-B1- 6 525 294

## Beschreibung

Die Erfindung betrifft eine Laserbearbeitungsoptik zur Bearbeitung eines Werkstückes, insbesondere einer Mehrblechverbindung, sowie ein damit verbundenes Arbeitsverfahren.

Ein Grundproblem beim Laserschweißen von verzinkten Stahlblechen, insbesondere bei Überlappverbindungen, ist die Ausgasung und Verdampfung der als Beschichtung auf den Blechen aufgetragenen Zinkschicht im Schweißpunkt. Durch die Verdampfung kommt es in der Schmelze um den Schweißpunkt zu einer Bildung von Blasen, die als Einschlüsse in der erkaltenden Schweißnaht erhalten bleiben. Diese Einschlüsse führen zu starken Unregelmäßigkeiten innerhalb der Schweißnaht und verschlechtern die mechanischen Eigenschaften der Schweißnaht in einem erheblichen Maße. Insbesondere bei Mehrblechverbindung wird daher angestrebt, dass die Bleche beim Verschweißen, insbesondere beim Laserschweißen, nicht mit einem Nullspalt aufeinander liegen, sondern ein schmaler Spalt zwischen den aufeinander liegenden Blechen vorhanden bleibt. Durch diesen Zwischenraum können die Schweißemissionen, wie z.B. die verdampfende Zinkbeschichtung, ausgasen.

Im Stand der Technik werden bisher zwei Lösungsansätze zur Erzeugung eines Ausgasungsspaltes zwischen den Blechen offenbart:

In der ersten Lösung werden die Bleche mechanisch aufgebogen, so dass ein Spalt zwischen den Blechen erzeugt wird. So beschreibt die DE 101 16 402 A1 eine mitlaufende Andrückvorrichtung zum Auseinanderspannen zweier oder mehrerer Bleche. Dabei ist vorgesehen, dass die Andrückvorrichtung als konische Hülse ausgebildet ist. An der Lagerung der Hülse ist ein Ausleger befestigt, an dessen freiem Ende eine frei drehbare Messerrolle gelagert ist, deren Schneide zwischen den Flansch eines ersten Blechs und eines zweiten Werkstücks drückt und damit die Bleche aufbiegt. Durch diese Aufbiegung wird ein Ausgasungsspalt zwischen dem Flansch und dem zu verschweißenden Werkstück erzeugt. Nachteilig ist hierbei, dass die drehbare Messerrolle während des fortlaufenden Schweißbetriebes schwer zu positionieren ist und damit eine fortlaufende Aufbiegung der Bleche, insbesondere bei tiefgezogenen Blechen mit breiten Maßtoleranzen, während des Schweißens nicht gewährleistet. Weiterhin erzeugt der permanente Andruck der Vorrichtung auf dem Werkstück Beschädigungen auf der Blechoberfläche und an den Blechkanten im Kontaktbereich der Messerrolle.

Weiterhin wird im Stand der Technik die Einfügung von Abstandhaltern zwischen den Blechen vor dem Verschweißen offenbart. Die DE 100 42 538 A1 beschreibt ein Verfahren zum Laserschweißen mit definierter Spaltweite zur Verschweißung von verzinkten Blechen. Hierzu wird im Bereich eines Überlappungsstoßes zwischen zwei Blechen eine Rauhigkeit mit einer Rautiefe angebracht, so dass durch den so geschaffenen Spalt die Schweißemissionen, insbesondere der Zinkdampf entweichen kann.

Weiterhin offenbart die DE 100 53 789 A1 ein Laserschweißverfahren zur Verbindung von zwei Materialien. Im erfindungsgemäßen Verfahren wird im Zwischenraum der Bleche eine Strukturierung erzeugt, beispielsweise durch eine auf die Blechoberflächen aufgetragene Folie mit einer Strukturierung. Die Strukturierung kann dabei unterschiedlich ausgestaltet und mit unterschiedlichen Höhen versehen sein.

Die DE 101 12 744 A1 offenbart ein Laserschweißverfahren, wobei der Zwischenspalt zwischen den Blechen mit einem Fixierungsmittel ausgefüllt ist. Das Fixierungsmittel enthält dabei Feststoffpartikel in Form von Glaskugeln, die einen Abstand zwischen den Blechen auch bei äußerer Kompression der Bleche gewährleisten. Weiterhin dient das Fixierungsmittel zur Abdichtung gegenüber äußeren Einflüssen, wie z.B. Korrosion.

In der AT 11 202 002 A wird offenbart eine Vorrichtung gemäss dem Oberbegriff des Anspruchs 1 und ein Verfahren gemäss dem Oberbegriff des Anspruchs 12 zum Spannen und Schweißen von aneinander liegenden Blechen, wobei eine Schweißeinrichtung oder ein Schweißstrahl zum Schweißen einer Schweißnaht selbsttätig entlang einer Führung relativ zu den Spannelementen bewegbar ist.

Problematisch an all diesen Lösungen ist, dass die Abstandhalter auch nach dem Verschweißen zwischen den Blechen verbleiben. Hierdurch können die mechanischen Eigenschaften der miteinander verschweißten Bleche negativ beeinflusst werden. Weiterhin ist hierbei ebenfalls unvorteilhaft, dass in einem zusätzlichen Produktionsprozess - vor dem eigentlichen Verschweißen der Bleche - die Abstandshalter zwischen die Bleche eingebracht werden müssen.

Die zur Durchführung der obigen Verfahren verwendeten Vorrichtungen weisen ebenfalls Nachteile auf. So müssen die bisher bekannten Andrückvorrichtungen aufgrund ihrer Baugröße zwangsläufig neben der Bearbeitungsstelle angreifen, wodurch relativ breite Flansche benötigt werden. Andere Nachteile entstehen z.B. durch die Erwärmung und Verschmutzung der bekannten Andrückvorrichtungen. So kann die Verschmutzung der Lager der Andrückrollen durch Spritzer und Schweißrauche zum Verklemmen der Rolle führen. Auch kann es vorkommen, dass speziell die untere Andrückvorrichtung in den Strahlengang des Laserstrahls unterhalb des Fokus hineinragt. Falls die Bearbeitungsparameter ungünstig gewählt sind, so dass es zur Durchschweißung kommt (das Schmelzbad reicht bis zur Unterseite des Werkstücks, so dass der Laserstrahl teilweise austreten kann), wird dann die untere Andrückvorrichtung durch den Laserstrahl aufgeheizt und kann beschädigt werden.

Bekannt sind Laserbearbeitungsköpfe mit dem grundsätzlich bekannten Prinzip der Wirkungsweise mit doppelten Andruckrollen (eine obere und eine untere Andruckrolle). Der Nachteil der Anordnung mit Rollen besteht allerdings darin, dass die Andruckrollen relativ viel Bauraum einnehmen, was die Zugänglichkeit des Bearbeitungskopfes zum Werkstück einschränkt. Zum anderen liegt der Andruckpunkt der Rollen zwangsläufig neben der Schweißstelle, dadurch werden die Bauteile neben dem eigentlichen Fügepunkt zusammengespannt. Weiterhin wird eine relativ große Flanschbreite der zu verschweißenden Bauteile benötigt, um die Andruckrolle neben dem Laserstrahl positionieren zu können.

Ausgehend von diesem Stand der Technik ist es die Aufgabe der vorliegenden Erfindung, eine Laserbearbeitungsoptik zur Bearbeitung eines Werkstückes unter Verbesserung der Zugänglichkeit des Bearbeitungskopfes sowie einer Optimierung des Schweißprozesses zu schaffen.

Erfindungsgemäß ist demnach eine Laserbearbeitungsoptik vorgesehen,

Die Aufgabe wird durch die Merkmale des Systems gemäss Anspruch 1 und des diesbezüglichen Verfahrens gemäss Anspruch 12 gelöst.

Die Erfindung basiert grundsätzlich auf dem oben beschriebenen Prinzip der Wirkungsweise eines Laserbearbeitungskopfes mit doppelten Andruckrollen (eine obere und eine untere Andruckrolle). Im Gegensatz dazu sieht die erfindungsgemäße Lösung folgendes Prinzip vor: Die Laserbearbeitungsoptik (16) ist fest mit einem oberen Andruckfinger (10) gekoppelt. An der Einheit 'Bearbeitungsoptik mit Andruckfinger' ist ein zweiter (unterer) Andruckfinger (20) befestigt. Die Spitze des oberen Andruckfingers liegt üblicherweise in der Ebene des Laserstrahlfokus (13). Der zweite (untere) Andruckfinger kann z.B. über eine Lineareinheit oder ein Drehelement, z.B. ein Drehgelenk, gegenüber dem ersten Andruckfinger bewegt werden. Die Bewegungsrichtung beim oberen und unteren Antrieb ist eine Linearbewegung, sofern es sich bei der unteren Antriebseinheit ebenfalls um einen Linearantrieb handelt und daher üblicherweise parallel zur Achse des Laserstrahls. Im Falle der Verwendung eines Drehgelenks für die untere Antriebseinheit erfolgt die Bewegungsrichtung auf einer Kreisbahn. Letzteres ist aus sterischen Gründen bei einigen Bearbeitungsprozessen bevorzugt, da räumliche Begrenzungen eine lineare Zuführung des Andruckfingers begrenzen könnten.

Die Laserbearbeitungsoptik mit oberem Andruckfinger und Lineareinheit mit unterem Andruckfinger ist über eine obere Lineareinheit mit der Führungsmaschine verbunden. Im Bearbeitungsprozess wird die komplette Einheit mit dem oberen Andruckfinger auf das Werkstück positioniert, dabei ist die untere Antriebseinheit voll ausgefahren, damit ein maximaler Abstand zwischen oberem und unterem Andruckfinger besteht. Das Werkstück ist üblicherweise eine Mehrblechverbindung, bevorzugt auch in Geometrie eines Flansches. Die untere Antriebseinheit wird dann eingefahren, wobei der untere Andruckfinger gegen den oberen Andruckfinger gefahren wird und dadurch die zu verschweißenden Bauteile gegeneinander gedrückt werden - je nach Antriebselement entweder linear in Richtung der Strahlachse oder auf einer Kreisbahn. Daraufhin kann der Schweißvorgang starten. Die Position der beiden Andruckfinger ist üblicherweise im Vorlauf zur Schweißstelle.

Es gibt Schweißvorgänge, bei denen die Werkstücke selbst nicht mit Nullspalt aufeinander gedrückt werden, damit die Möglichkeit des Entgasens geschaffen wird, z.B. bei beschichteten Werkstücken. Die Erfindung sieht hierfür vor, dass durch eine geeignete Ansteuerung der Andruckfinger mittels der Antriebseinheiten es erreicht wird, dass sich zwischen den Werkstücken ein definierter Spalt einstellen kann. Dabei werden die Bauteile nicht bis zum Kontakt aneinandergedrückt; stattdessen wird der untere Andruckfinger gegen den oberen Andruckfinger gefahren bis zu einem Abstand, der der Summe der Werkstückstärken plus der Toleranzhöhe entspricht. Durch die Erfindung wird mithin gewährleistet, dass sich die Werkstücke während des Verschweißens frei und relativ zueinander entlang einer Weglänge (Abstand) in senkrechter Richtung zu den Werkstückoberflächen bis zu einem maximalen Gesamtabstand bewegen können, wobei der Gesamtabstand der Summe der Werkstückstärken und einer zusätzlichen Toleranzhöhe entspricht. Der Vorteil des erfindungsgemäßen Verfahrens liegt darin, dass die Werkstücke nicht unter einer äußeren Kraft gespannt werden, sondern eine Aufbiegung der Werkstücke durch eine thermisch induzierte Verspannung innerhalb der Werkstücke selbst einen Spalt zwischen den Werkstücken erzeugt. Dabei können die äußeren Werkstücke maximal die durch den Gesamtabstand vorgegebene Toleranzhöhe aufgrund der äußeren Begrenzung annehmen. Die thermisch induzierte Aufbiegung wird durch die hohen Temperaturgradienten in den Nähe des Schweißpunkts und die damit verbundenen lokalen thermischen Verspannungen in den Werkstücken erzeugt. In unmittelbarer Umgebung des Schweißpunkts wird hierdurch zwischen den Werkstücken ein ausreichender Spalt erzeugt, wobei durch den Spalt die entstehenden Schweißemissionen entweichen können. Hierdurch wird ein Entweichen der Schweißemission durch die den Schweißpunkt umgebende Schmelze und damit eine entsprechende Blasenbildung in der Schweißnaht verhindert.

Durch die Vorgabe des maximalen Gesamtabstands zwischen den äußersten Werkstücken wird die Weglänge in senkrechter Richtung zu den Werkstückoberflächen begrenzt, so dass eine vertikale und vorgegebene Verschiebung senkrecht zur Werkstückoberfläche maximal auftreten kann. Diese Begrenzung der Weglänge wird durch eine geeignete Ansteuerung der Andruckfinger erreicht, die im Folgenden als 'Begrenzungselemente' bezeichnet werden. Die Begrenzungselemente sind daher nicht primär kraft-, sondern weggesteuert, oder "kraftgesteuert mit zusätzlichen Mitteln einer Wegbegrenzung" bzw. "kraftgesteuert mit zusätzlichen Mitteln einer Positionsverriegelung" und üben einen deformationsabhängigen Andruck auf die äußeren Werkstückoberflächen aus, wobei die Deformation durch die thermisch induzierte Aufbiegung erzeugt wird. Dadurch verbleibt zwischen den Werkstücken ein Spalt, durch den die Schweißemissionen entweichen können, wobei die Summe der maximalen Abstände zwischen den Werkstücken der vorgegebenen Toleranzhöhe entspricht.

Andererseits gibt es aber auch Schweißvorgänge, bei denen gerade ein Nullspalt zwischen den zu verweißenden Werkstücken erwünscht ist. Auch für derartige Prozesse ist die Erfindung geeignet, da der Abstand zwischen den Andruckfingern frei wählbar ist und somit auch "Null" einnehmen kann.

Die Weglänge der aufeinander liegenden Werkstücke wird durch die Begrenzungselemente (= Andruckfinger) begrenzt, wobei die Begrenzungselemente die jeweils äußeren Werkstücke begrenzen und die Weglänge zwischen den Begrenzungselementen dem Gesamtabstand entspricht. Hierzu werden die Begrenzungselemente mit dem die Werkstücke verschweißenden Schweißpunkt parallel zu den äußeren Werkstückoberflächen mitgeführt und damit in gleicher räumlicher Nähe zum sich bewegenden Schweißpunkt gehalten. Hierdurch wird gerade die thermisch induzierte Aufbiegung der Werkstücke im Bereich des Schweißpunkts durch die Begrenzungselemente bis zur Toleranzhöhe eingeschränkt. Der durch die thermisch induzierte Aufbiegung erzeugte Spalt zwischen den Werkstücken wird damit in enger räumlicher Nähe zum Schweißpunkt und somit zum Ort der maximalen Schweißemission gebildet.

Das erfindungsgemäße Verfahren zur Bearbeitung eines Werkstückes, insbesondere einer Mehrblechverbindung, unter Benutzung einer Laserbearbeitungsoptik, bestehend aus oberem und unterem Andruckfinger, wobei die Laserbearbeitungsoptik fest mit dem oberen Andruckfinger gekoppelt ist und der obere Andruckfinger mit Laserbearbeitungsoptik mit einer Lineareinheit, bestehend aus Linearführung und Linearantrieb, verbunden ist, und der untere Andruckfinger an der Laserbearbeitungsoptik befestigt ist und wobei die Laserbearbeitungsoptik mit dem oberen Andruckfinger und der Lineareinheit mit der unteren Antriebseinheit und dem unteren Andruckfinger über die Lineareinheit mit einer Führungsmaschine, insbesondere einem Roboterarm, verbunden sind und der untere Andruckfinger beweglich gelagert und angetrieben ist und die Bewegungsrichtung der unteren Antriebseinheit entweder linear in Richtung der Strahlachse oder auf einer Kreisbahn erfolgt, und wobei die Spitze des oberen Andruckfingers in der Ebene des Laserstrahlfokus liegt und der untere Andruckfinger gegenüber dem ersten Andruckfinger bewegbar ist, umfasst die Verfahrensschritte, dass
■ während des Bearbeitungsprozesses die Laserbearbeitungsoptik mit dem oberen Andruckfinger auf das Werkstück positioniert wird, wobei die untere Antriebseinheit voll ausgefahren ist, damit ein maximaler Abstand zwischen oberem und unteren Andruckfinger besteht, und
■ anschließend die untere Antriebseinheit dann wieder eingefahren wird, wobei der untere Andruckfinger in Richtung des oberen Andruckfingers gefahren wird bis zu einer vorgebbaren Position in Relation zum oberen Andruckfinger,
■ und dadurch die zu verschweißenden Bauteile gegeneinander in einer gewünschten Position gehalten werden, und letztlich daraufhin
■ der Schweißvorgang gestartet wird.

Erfindungsgemäß ist auch vorgesehen, dass in einem ersten Verfahrensschritt die aufeinander liegenden Werkstücke bis auf die Summe der Werkstückstärken zusammengedrückt werden und in einem zweiten Verfahrensschritt die Weglänge um die Toleranzhöhe auf den Gesamtabstand vergrößert wird.

Die Toleranzhöhe ist dabei die Summe der jeweiligen zugelassenen Werkstückabstände zwischen den Werkstücken zueinander, wobei die jeweiligen Werkstückabstände zwischen 0,05 mm und 0,3 mm liegen.

Das erfindungsgemäße Verfahren sieht weiter vor, dass
- die Andruckfinger als Begrenzungselemente dienen, die den Abstand der übereinander liegenden Werkstücke begrenzen,
- wobei die Begrenzungselemente die jeweils äußeren Werkstücke begrenzen und den Abstand zwischen den Begrenzungselementen dem Gesamtabstand (= Summe der Werkstückstärken plus Toleranzabstände) entspricht,
- wobei die Begrenzungselemente mit dem die Werkstücke verschweißenden Schweißpunkt parallel zu den jeweiligen äußeren Werkstückoberflächen mitgeführt und damit in gleicher räumlicher Nähe zum sich bewegenden Schweißpunkt gehalten werden.

Erfindungsgemäß ist auch eine Vorrichtung vorgesehen, die zumindest zwei Andruckfinger als Begrenzungselemente zur Einstellung des Abstands aufweist und dadurch den Gesamtabstand zwischen den äußeren Werkstücken einstellt, wobei die Abstandseinstellung mittels mindestens eines Antriebs erfolgt und der bewegliche Teil des Antriebs über eine Halterung mit dem unteren Begrenzungselement (Andruckfinger) verbunden ist. Das obere Begrenzungselement (Andruckfinger) ist über eine Halterung mit der Laserbearbeitungsoptik und der oberen Lineareinheit verbunden, wobei die Begrenzungselemente letztlich über die untere Antriebseinheit miteinander verbunden und relativ zueinander bewegbar sind.

Da erfindungsgemäß die Begrenzungselemente entlang mindestens einer Achse gegeneinander verschieb- oder schwenkbar sind, dient der untere Antrieb zur Führung und relativen Positionierung der Andruckfinger zueinander. Insbesondere ist eine relative Verschiebung der Begrenzungselemente entlang der Längsachse des Laserstrahls vorgesehen, wobei der untere Antrieb zur Führung und relativen Fixierung der Begrenzungselemente dient.

Im Falle eines schwenkbaren Begrenzungselements mit einem steuerbaren Gelenk als unteres Führungselement (anstatt der unteren Lineareinheit) ist eine schnelle Positionierung des oberen Andruckfingers an die äußere Werkstückoberfläche gewährleistet. Insbesondere kann dann die Positionierung des oberen Andruckfingers mit einer ausschließlich vertikalen Verfahrbewegung der Führungsmaschine erfolgen, oder mittels der oberen Lineareinheit; ein seitliches Verfahren der Führungsmaschine ist dann nicht erforderlich. Durch eine in Schweißrichtung gelegene Schwenkachse als Führungsgelenk wird der untere Andruckfinger auf einer Kreisbahn an die untere äußere Werkstückoberfläche positioniert und gesteuert.

Weiterhin ist vorgesehen, dass das obere Begrenzungselement mit der Laserbearbeitungsoptik als Schweißvorrichtung verbunden ist, wobei die Schweißvorrichtung über das obere Führungselement (oberer Linearantrieb) mit der Führungsmaschine verbunden und entlang einer senkrecht zur Werkstückoberfläche liegenden Achse relativ zur Führungsmaschine bewegbar ist. Über den oberen Linearantrieb wird die Schweißvorrichtung relativ zur Führungsmaschine entlang einer senkrecht zur Werkstückoberfläche liegenden Achse bewegt und kann damit zur äußeren Werkstückoberfläche kraftreduziert geführt werden.

Im Sinne der vorliegenden Erfindung wird unter dem Begriff "kraftreduziert" eine Minimierung der Auflagekräfte bei der Führung der Begrenzungselemente entlang der Werkstückoberfläche verstanden. So erzeugt auch bei eingestelltem Gesamtabstand zwischen den Begrenzungselementen, also eines größeren Abstandes zwischen den äußeren Werkstückoberflächen als der Summe der Werkstückstärken, ein auf einem Werkstück aufliegendes Begrenzungselement - bedingt durch die Gewichtskraft - eine Auflagekraft im Werkstück bzw. eine Reaktionskraft im Begrenzungselement. Diese während des Schweißvorganges entstehenden zusätzlichen Auflage- bzw. Reaktionskräfte auf der Werkstückoberfläche und in den Begrenzungselementen werden durch die kraftreduzierte Führung der Begrenzungselemente minimiert. Durch die Einhaltung des vorgegebenen maximalen Gesamtabstands zwischen den Begrenzungselementen mittels des unteren Antriebs in Verbindung mit der Steuerung der gesamten Vorrichtung durch den oberen Antrieb wird eine kraftreduzierte Führung der gesamten Vorrichtung und insbesondere der Begrenzungselemente entlang der beiden äußeren Werkstückoberflächen gewährleistet. Als Antriebe bieten sich insbesondere Servomotoren und Linearantriebe an. Vor allem erlaubt die Verwendung eines doppelwirkenden pneumatischen Zylinders mit einem Zweikammersystem als Antrieb, aufgrund der unabhängigen Ansteuerung der gegeneinander wirkenden Zylinderkammern, eine genaue Positionierung oder Einstellung der Auflagekräfte der gesamten Vorrichtung und der Begrenzungselemente relativ zu den beiden äußeren Werkstücken.

Ebenfalls können mittels mindestens eines Kraftmessers die Andrücke der Begrenzungselemente auf den äußeren Werkstückoberflächen gemessen und durch eine Elektronik permanent die gemessenen Andrücke mit einem vorgegebenen Soll-Andruck verglichen werden, wobei der untere Antrieb die Weglänge zwischen den Begrenzungselementen bei Erreichen des vorgegebenen Soll-Andrucks um die Toleranzhöhe erweitert. Diese erfindungsgemäße Vorrichtung bietet sich vor allem bei unbekannten Werkstückstärken oder bei Werkstücken mit großen Maßtoleranzen an, da durch die erste Messung die Gesamtwerkstückstärke ermittelt und anschließend durch den unteren Antrieb der Abstand zwischen den Begrenzungselementen um die Toleranzhöhe nachjustiert wird.

Ferner ist eine Laserbearbeitungsoptik bevorzugt, wobei Kraftmesser die Andrücke der Andruckfinger auf den jeweiligen äußeren Werkstückoberflächen messen und die Andruckfinger in einem konstanten Kraftverhältnis halten und gegebenenfalls mittels des oberen Linearantriebs nachregulieren. Vorteilhaft hieran ist, dass die Bearbeitungsoptik in einem Schwebezustand relativ zu den Werkstücken gehalten wird, was letztlich einer kraftreduzierten Führung entspricht.

Durch einen verstellbaren Anschlag am unteren Antrieb kann die maximale mögliche Weglänge zwischen den Begrenzungselementen zusätzlich eingestellt werden. Hierdurch wird die Positionierung und Fixierung der Begrenzungselemente zueinander zusätzlich mechanisch unterstützt.

Die Schweißvorrichtung ist eine Laserschweißvorrichtung. Das Begrenzungselement ist erfindungsgemäß ein Andruckfinger. Der Effekt der Aufbiegung durch die thermisch induzierte Verspannung innerhalb der Werkstücke kann durch eine externe Wärmequelle in der Nähe des Schweißpunkts, z.B. einen zusätzlichen Diodenlaser, einen Infrarot-Strahler oder einen Plasma-Brenner, durch die lokale zusätzliche Aufheizung der Werkstücke unterstützt werden.

Vorteile der Erfindung lassen sich daher wie folgt zusammenfassen: Die Erfindung behebt die Nachteile des Andrucksystems mit der Doppelrolle:
- Wenn die Andruckfinger vorlaufend in Schweißrichtung positioniert werden, werden die zu verschweißenden Bauteile direkt an der Schweißstelle zusammengedrückt.
- Die Bauteile können mit oder ohne Nullspalt miteinander verschweißt werden.
- Aufgrund der sehr geringen Baugröße des Doppelfinger-Andrucksystems kann dieses Verfahren auch bei Bauteilen mit erschwerter Zugänglichkeit zur Fügestelle eingesetzt werden.
- Die Flanschbreite der zu schweißenden Bauteile kann erheblich verringert werden, da die Finger direkt im Vorlauf in der Störgeometrie des Laserstrahls angeordnet sind. Geringere Flanschbreiten bedeuten z.B. Gewichtsersparnis für das zu fügende Bauteil.
- -Erhöhte Prozesssicherheit dadurch, dass die Bauteile mit höheren Toleranzen gegeneinander positioniert werden können, ohne dass im Fügevorgang die Gefahr besteht, dass eines der Andruckelemente von den zu fügenden Teilen abrutschen kann.

Weitere vorteilhafte Maßnahmen sind in den übrigen Unteransprüchen beschrieben; die Erfindung wird anhand von Ausführungsbeispielen und der nachfolgenden Figuren näher beschrieben; es zeigt:
- **Fig. 1**: eine schematische Seitenansicht der erfindungsgemäßen Vorrichtung als Laserschweißvorrichtung;
- **Fig. 2**: Ansicht entsprechend Fig. 1 mit zwei zu verbindenden Werkstücken;
- **Fig. 3**: eine Ausschnittsvergrößerung von zwei zu verbindenden Werkstücken, welche durch die beiden Andruckfinger in Position gehalten werden;
- **Fig. 4**: seitliche Ansicht der Anordnung von oberem- und unterem Andruckfinger in geöffneter Stellung und des Laserfokus;
- **Fig. 5**: seitliche Ansicht der Anordnung von oberem- und unterem Andruckfinger mit minimalen Abständen und des Laserfokus.
- **Fig. 6**: perspektivische Darstellung der Andruckfinger samt Halterungen mit zwei verschiedenen Ausführungen des unteren Andruckfingers;
- **Fig. 7**: Ausschnittvergrößerung einer Schweißstelle mit Anordnung von Andruckfingern und Werkstücken in Richtung der Schweißnaht
- **Fig. 8**: seitliche Ansicht der Anordnung von Andruckfingern, deren Halterungen und Laserstrahlfokus

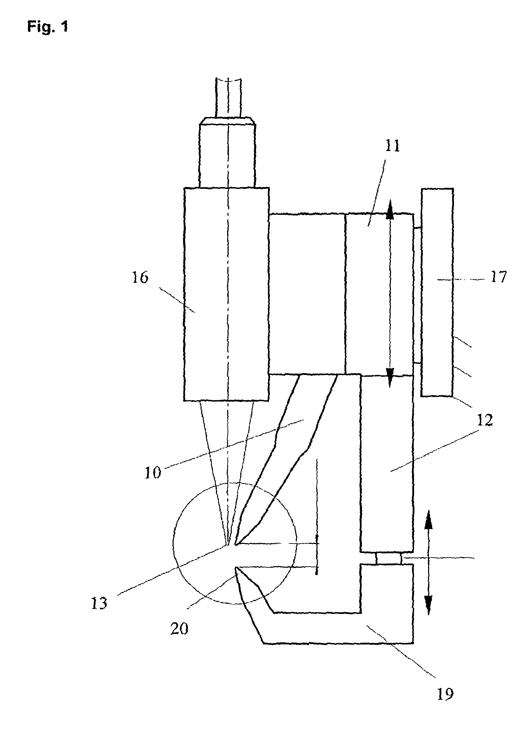

Fig. 1 zeigt eine schematische Seitenansicht der erfindungsgemäßen Vorrichtung als Laserschweißvorrichtung. Die Andruckfinger 10 und 20 sind jeweils mit einem korrespondierenden Antrieb 11 und 12 verbunden und sind vorlaufend in Schweißrichtung in direkter Nähe des Laserstrahlfokus 13 positioniert. Der Abstand zwischen den Andruckfingern 10 und 20 kann durch den unteren, zum unteren Andruckfinger 20 gehörenden, Antrieb 12 (hier ein Linearantrieb) verändert werden. Ein zweiter Linearantrieb 11 ist direkt mit der Laservorrichtung 16 verbunden. Mit dieser Lineareinheit 11 kann der Fokus 13 des Lasers verschoben werden. Die gesamte Vorrichtung kann an einem Roboterarm 17 befestigt sein, durch welchen sie entlang der Schweißnaht geführt wird.

Der Laserbearbeitungskopf selbst ist vorzugsweise modulartig aufgebaut, umfassend
- ein erstes Modul, bestehend aus
   a) Grundplatte 17 mit oberem Linearantrieb 11 und Optik 16, und
   b) oberem Andruckfinger 10 mit Halterung
- ein zweites Modul, bestehend aus
   c) unterem Andruckfinger 20 mit Halterung
   d) unterer Antriebsführung 12, mit dessen Hilfe der untere Andruckfinger 20 relativ zum oberen Andruckfinger beweglich und ansteuerbar ist.

Wie bereits erwähnt kann es sich bei dem unteren Antrieb um einen Linearantrieb oder um einen Antrieb mit Drehgelenk handeln.

Die Grundplatte 17 dient im Rahmen dieses Ausführungsbeispiels lediglich als "Adapter": Über diese Grundplatte kann die Laserbearbeitungsoptik mit einer Führungsmaschine (z.B. Roboterarm) verbunden sein.

Dieser modulartige Aufbau hat den Vorteil, dass der Laserbearbeitungskopf in beiden Verfahrrichtungen genutzt werden kann bzw. um vorlaufenden und nachlaufenden Betrieb zu ermöglichen. Die Halterungen dienen gleichzeitig als Spannmittel und können rechts und links vom Laserbearbeitungskopf angeordnet sein. Um Genauigkeit und Kraftübertragung zu gewährleisten, sind hierzu eine Schnittstelle mit Nut-Feder-Verbindung und Anschlag vorhanden.

Es ist erfindungsgemäß vorgesehen, dass mittels einer Nut-Feder-Schnittstelle an der unteren Antriebseinheit (12), mit welcher der untere Andruckfinger (20) relativ zum oberen Andruckfinger beweglich und ansteuerbar ist, die Halterung (19) des unteren Andruckfingers (20) ausgetauscht werden kann. Dies kann insbesondere bei bestimmten Bearbeitungsprozessen von Vorteil werden, bei denen aus räumlichen Gründen der untere Andruckfinger seitlich an die Bearbeitungsstelle positioniert werden muss, z.B. bei Werkstückformen, die die freie Zugänglichkeit beschränken und daher eine differenziertere Ausgestaltung notwendig ist.

Aufgrund der hohen Belastung der Andruckfinger 10 und 20 ist es wichtig, diesen eine hohe Festigkeit bei gleichzeitigen geringem Verschleiß zu verleihen. Als vorteilhaft erweist sich daher ein Material wie Hartmetall oder Keramik oder naturharte Mineralien wie beispielsweise Korund oder Saphir. Letztere sind aufgrund ihrer Härte, geringer Verschleißfähigkeit und ihrer glatten Oberfläche (Reibungsarmut) bevorteilt, da somit der Kontakt zum Werkstück optimiert wird.

Weiterhin ist es wichtig, dass der Strahlengang des Lasers nicht durch die Andruckfinger 10 und 20 verdeckt wird, was ansonsten zu einer Beschädigung derselben und zu einer ineffizienten Werkstückbearbeitung führen würde. Aus diesem Grund sind die Andruckfinger und deren Halterungen derart angeordnet, dass sie den Strahlengang des Lasers, insbesondere unterhalb des Laserfokus nicht verdecken.

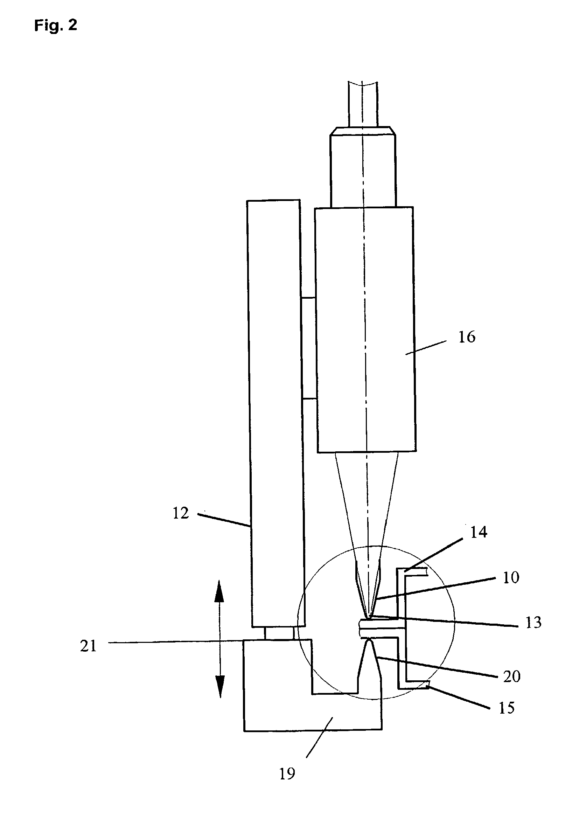

In Fig. 2 werden zwei zu verschweißende Bauteile 14, 15 durch die Andruckfinger 10, 20 vorlaufend direkt an der Schweißnaht zusammengedrückt. Durch den Linearantrieb 12 kann der Abstand zwischen den Andruckfingern 10, 20 an die Materialstärke der beiden Werkstücke 14, 15 angepasst werden. Außerdem kann damit der Abstand um die Toleranzhöhe erweitert werden. Der Fokus 13 des Lasers ist auf die Spitze des oberen Andruckfingers 10 eingestellt. 21 kennzeichnet die Nut-Feder-Schnittstelle zum Austauschen des unteren Halteelements 19 mit unterem Andruckfinger.

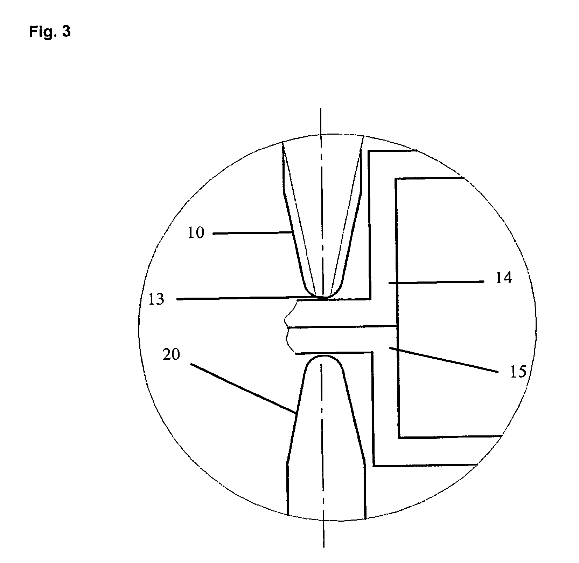

Fig. 3 zeigt eine Ausschnittvergrößerung aus Fig. 2. Zu sehen sind die beiden miteinander zu verbindenden Werkstücke 14 und 15, die von den Andruckfingern 10 und 20 genau im Fokus 13 des Lasers positioniert werden.

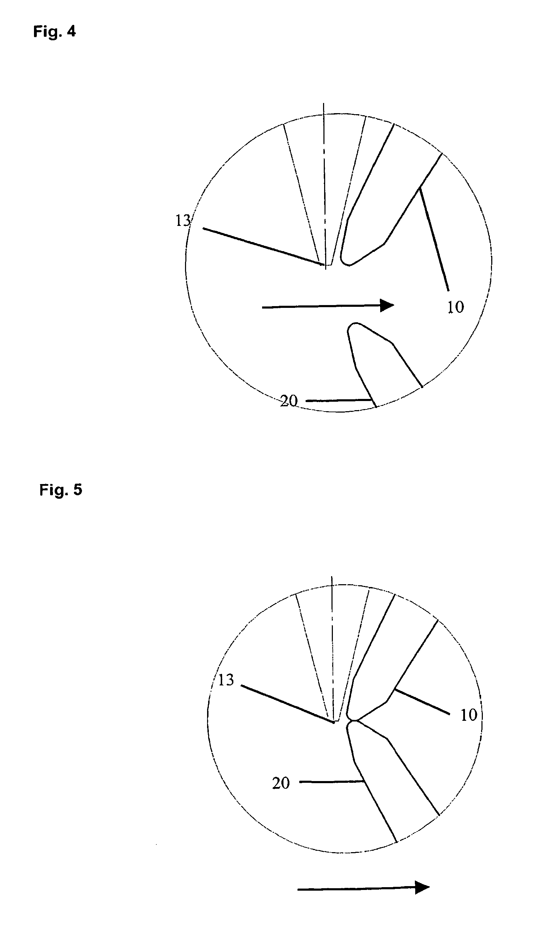

Die Figuren 4 und 5 zeigen eine seitliche Ansicht der Position der Andruckfinger 10 und 20 zu dem Fokus 13 des Lasers. Der dortige Pfeil gibt die Bewegungsrichtung der Schweißvorrichtung an. Es ist gut zu erkennen, dass die Andruckfinger direkt vor dem Fokus 13 des Lasers vorlaufen. Die Position des oberen Andruckfingers 10 ist im Verhältnis zum Fokus 13 des Lasers fixiert. Der Abstand zwischen dem unteren Andruckfingers 20 und dem oberen Andruckfinger 10 kann durch die in dieser Abbildung nicht dargestellten Lineareinheit 12 verändert werden.

Das erfindungsgemäße Verfahren sieht darüber hinaus eine hohe Reproduzierbarkeit vor, indem Verschleißelemente ohne Neujustierung der Laserbearbeitungsoptik (16) ausgewechselt werden können.

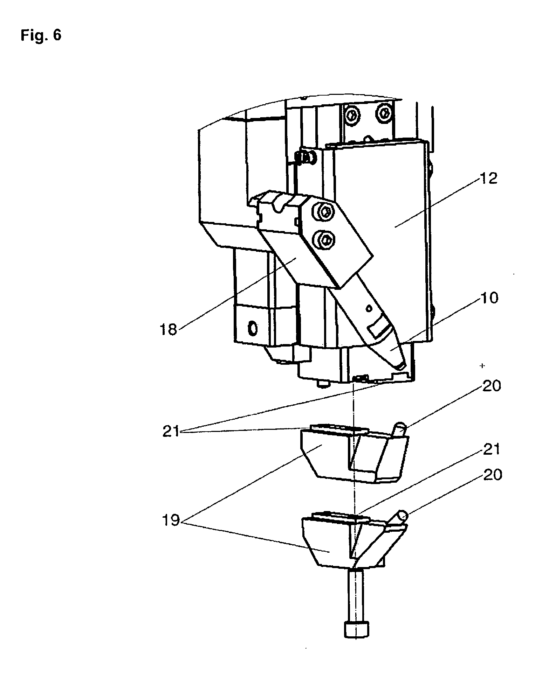

Figur 6 zeigt eine perspektivische Darstellung der Andruckfinger samt Halterungen. Der obere Andruckfinger 10 ist durch die Halterung 18 mit der erfindungsgemäßen Vorrichtung verbunden. Figur 6 zeigt zwei alternative Halterungen 19 für einen unteren Andruckfinger 20. Diese werden wahlweise über eine Nut/Feder-Verbindung mit der unteren Antriebseinheit 12 verbunden. Die in Figur 6 gezeigten Ausgestaltungen der Halterung 19 sind nur beispielhaft und können auch andere Formen, welche die Zugänglichkeit des Werksstücks erleichtern, aufweisen.

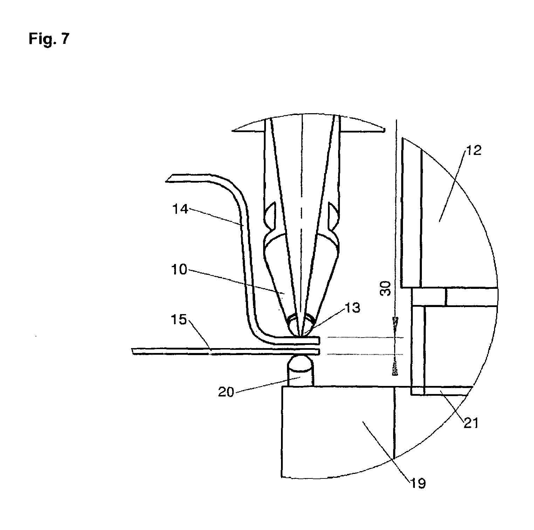

Figur 7 zeigt im Detail eine Draufsicht auf eine Schweißstelle, wobei mit 30 der Abstand zwischen den zu bearbeitenden Werkstücken 14 und 15 gekennzeichnet ist, die durch die Andruckfinger 10 und 20 gehalten sind. Der Laserstrahlfokus 13 ist direkt auf die Schweißstelle gerichtet.

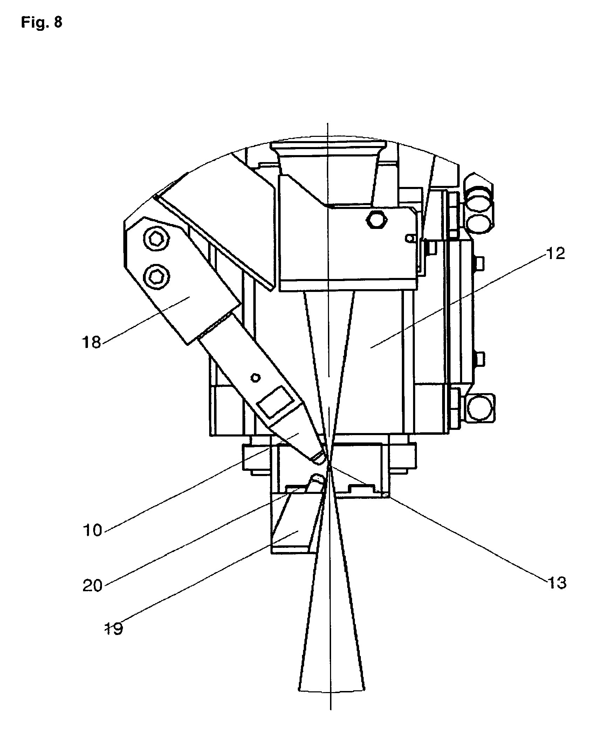

Figur 8 zeigt eine seitliche Ansicht der Anordnung von Andruckfingern, deren Halterungen und Laserstrahlfokus. Die Halterung 19 des unteren Andruckfingers 20 ist mit der unteren Antriebseinheit 12 verbunden. Der obere Andruckfinger ist durch die Halterung 18 mit der erfindungsgemäßen Vorrichtung verbunden. Der Laserstrahlfokus 13 befindet sich direkt unterhalb, in Richtung der Spitze des oberen Andruckfingers 10. So wird gewährleistet, dass Andruckpunkt und Schweißstelle in direkter Nähe zueinander liegen.

### Bezugszeichenliste

- 10: oberer Andruckfinger
- 11: Obere Lineareinheit
- 12: Untere Antriebseinheit (zu 20)
- 13: Laserstrahlfokus
- 14: oberes Werkstück
- 15: unteres Werkstück
- 16: Laserbearbeitungsoptik
- 17: Grundplatte bzw. Adapter zur Führungsmaschine
- 18: Halterung für oberen Andruckfinger
- 19: Halterung für unteren Andruckfinger
- 20: Unterer Andruckfinger
- 21: Schnittstelle mit Nut/Feder-Verbindung zur Befestigung des unteren Andruckfingers
- 30: Abstand zwischen den Andruckfingern ( = Weglänge)

## Patentansprüche

1. System bestehend aus Laserbearbeitungsoptik zur Bearbeitung eines Werkstückes, insbesondere einer Mehrblechverbindung, oberem und unterem Andruckfinger (10, 20), wobei der obere Andruckfinger (10) mit Laserbearbeitungsoptik (16) mit einer Lineareinheit (11), bestehend aus Linearführung und Linearantrieb, verbunden ist, und der untere Andruckfinger (20) beweglich gelagert und über eine untere Antriebseinheit (12) angetrieben ist und die Bewegungsrichtung einer Antriebseinheit (12) entweder linear in Richtung der Strahlachse oder auf einer Kreisbahn erfolgt, **dadurch gekennzeichnet, dass**
a) die Laserbearbeitungsoptik (16) fest mit dem oberen Andruckfinger (10) gekoppelt ist und der untere Andruckfinger (20) an der Laserbearbeitungsoptik (16) befestigt ist,
b) wobei die Laserbearbeitungsoptik (16) mit dem oberen Andruckfinger (10) und der Lineareinheit (11) sowie mit dem unteren Andruckfinger (20) und der unteren Antriebseinheit (12) über die Lineareinheit (11) mit einer Führungsmaschine, insbesondere einem Roboterarm, verbunden sein kann,
c) und wobei die Andruckfinger (10, 20) mit dem die Werkstücke (14, 15) verschweißenden Schweißpunkt parallel zu den äußeren Werkstückoberflächen mitgeführt sind,
d) und der Fokus (13) des Lasers auf die Spitze des oberen Andruckfingers (10) eingestellt ist, so dass die Spitze des oberen Andruckfingers (10) in der Ebene des Laserstrahlfokus (13) liegt,
e) und der untere Andruckfinger (20) gegenüber dem oberen Andruckfinger (10) bewegbar ist.

2. System nach Anspruch 1, wobei die Andruckfinger (10, 20) als Begrenzungselemente zur Begrenzung des Abstandes zwischen den Werkstücken (14, 15) dienen.

3. System nach Anspruch 1, wobei die Mehrblechverbindung die Geometrie eines Flansches aufweist.

4. System nach Anspruch 1 bis 3, wobei die Position der Andruckfinger (10, 20) zueinander über Abstands- oder Verstellelemente einstellbar ist.

5. System nach Anspruch 1 bis 4, wobei die Andruckfinger in einem vorgebbaren Abstand zueinander positionierbar und fixierbar sind.

6. System nach einem oder mehreren der vorhergehenden Ansprüche, wobei wenigstens ein Kraftmesser die Andrücke der Andruckfinger (10, 20) auf den jeweiligen äußeren Werkstückoberflächen misst und eine Elektronik permanent die gemessenen Andrücke mit einem vorgegebenen Soll-Andruck vergleicht, wobei mindestens ein Antrieb den Abstand zwischen den Andruckfingern (10, 20) bei Erreichen des vorgegebenen Soll-Andrucks um die Toleranzhöhe erweitert.

7. System nach einem oder mehreren der vorhergehenden Ansprüche, wobei Kraftmesser die Andrücke der Andruckfinger (10, 20) auf den jeweiligen äußeren Werkstückoberflächen messen und die Andruckfinger in einem konstanten Kraftverhältnis halten und gegebenenfalls mittels des oberen Linearantriebs nachregulieren.

8. System nach einem oder mehreren der vorhergehenden Ansprüche, wobei die Halteelemente (18, 19) der Andruckfinger (10, 20) derart angeordnet sind, dass der Strahlengang des Lasers nicht verdeckt wird.

9. System nach einem oder mehreren der vorhergehenden Ansprüche, wobei das Material der Spitze der Andruckfinger (10, 20) Hartmetall oder Keramik oder ein naturhartes Mineral ist.

10. System nach einem oder mehreren der vorhergehenden Ansprüche, wobei mittels einer Nut-Feder-Schnittstelle an der unteren Antriebseinheit (12), mit welcher der untere Andruckfinger (20) relativ zum oberen Andruckfinger (10) beweglich und ansteuerbar ist, die Halterung (19) des unteren Andruckfingers (20) ausgetauscht werden kann.

11. System nach einem oder mehreren der vorhergehenden Ansprüche, wobei die Verschleißelemente ohne Neujustierung der Laserbearbeitungsoptik (16) ausgewechselt werden können.

12. Verfahren zur Bearbeitung eines Werkstückes, insbesondere einer Mehrblechverbindung, unter Benutzung eines Systems bestehend aus Laserbearbeitungsoptik zur Bearbeitung eines Werkstückes, insbesondere einer Mehrblechverbindung, oberem und unterem Andruckfinger (10, 20), wobei der obere Andruckfinger (10) mit Laserbearbeitungsoptik (16) mit einer Lineareinheit (11), bestehend aus Linearführung und Linearantrieb, verbunden ist, und der untere Andruckfinger (20) beweglich gelagert und über eine untere Antriebseinheit (12) angetrieben ist und die Bewegungsrichtung einer Antriebseinheit (12) entweder linear in Richtung der Strahlachse oder auf einer Kreisbahn erfolgt, **dadurch gekennzeichnet, dass** die Laserbearbeitungsoptik (16) fest mit dem oberen Andruckfinger (10) gekoppelt ist und der untere Andruckfinger (20) an der Laserbearbeitungsoptik (16) befestigt ist, wobei die Laserbearbeitungsoptik (16) mit dem oberen Andruckfinger (10) und der Lineareinheit (11) sowie mit dem unteren Andruckfinger (20) und der unteren Antriebseinheit (12) über die Lineareinheit (11) mit einer Führungsmaschine, insbesondere einem Roboterarm, verbunden sein kann umfassend die Verfahrensschritte, dass
a) während des Bearbeitungsprozesses die Laserbearbeitungsoptik mit dem oberen Andruckfinger auf das Werkstück positioniert wird, wobei die untere Antriebseinheit (12) voll ausgefahren ist, damit ein maximaler Abstand zwischen oberem und unteren Andruckfinger besteht, und
b) anschließend die untere Antriebseinheit (12) dann wieder eingefahren wird, wobei der untere Andruckfinger (20) in Richtung des oberen Andruckfingers (10) gefahren wird bis zu einer vorgebbaren Position in Relation zum oberen Andruckfinger,
c) und dadurch die zu verschweißenden Bauteile (14, 15) gegeneinander in einer gewünschten Position gehalten werden, und letztlich daraufhin
d) der Schweißvorgang gestartet wird, wobei die Andruckfinger (10, 20) mit dem die Werkstücke (14, 15) verschweißenden Schweißpunkt parallel zu den äußeren Werkstückoberflächen mitgeführt und damit in gleicher räumlicher Nähe zum sich bewegenden Schweißpunkt gehalten werden,
e) und der Fokus (13) des Lasers auf die Spitze des oberen Andruckfinger (10) eingestellt ist, so dass die Spitze des oberen Andruckfingers (10) in der Ebene des Laserstrahlfokus (13) liegt,
f) und der untere Andruckfinger (20) gegenüber dem oberen Andruckfinger (10) bewegbar ist.

13. Verfahren nach Anspruch 12,
• wobei die Andruckfinger als Begrenzungselemente dienen, die den Abstand der übereinander liegenden Werkstücke begrenzen, und
• wobei die Begrenzungselemente die jeweils äußeren Werkstücke begrenzen und den Abstand zwischen den Begrenzungselementen dem Gesamtabstand (= Summe der Werkstückstärken plus Toleranzabstände) entspricht.

14. Verfahren nach Anspruch 12 oder 13, wobei nach Aneinanderdrücken der Bauteile bis auf die Summe der Werkstückstärken der Abstand der Andruckfinger um die Toleranzhöhe auf den Gesamtabstand erweitert wird, bevor der Schweißvorgang gestartet wird.

15. Verfahren nach Anspruch 14, wobei die Toleranzhöhe die Summe der jeweiligen Werkstückabstände zwischen den Werkstücken zueinander ist, wobei die jeweiligen Werkstückabstände zwischen 0,05 mm und 0,3 mm liegen.

16. Verfahren nach einem oder mehreren der vorhergehenden Ansprüche, wobei die Werkstücke (14, 15) durch eine externe Wärmequelle in der Nähe des Schweißpunkts lokal zusätzlich aufgeheizt werden.

## Claims

1. System consisting of laser machining optics for the treatment of a workpiece, especially a multiple sheet metal connection, upper and lower pressure finger (10, 20), whereas the upper pressure finger (10) with laser machining optics (16) is connected with a linear unit (11), consisting of linear guiding and linear drive and the lower pressure finger (20) is flexibly mounted and driven by means of a lower drive unit (12) and the direction of movement of a drive unit (12) takes place either linearly in the direction of the steel axis or on the circular orbit, **characterised in that**
a) the laser machining optics (16) is coupled firmly with the upper pressure finger (10) and the lower pressure finger (20) is attached to the laser machining optics (16),
b) whereas the laser machining optics (16) with the upper pressure finger (10) and the linear unit (11) as well as with the lower pressure finger (20) and the lower pressure unit (12) can be connected via the linear unit (11) with a guiding machine, especially a robot arm,
c) and whereas the pressure finger (10, 20) is led parallely to the outer workpiece surfaces with the welding point welding the workpieces (14, 15),
d) and the focus (13) of the laser is set to the top of the upper pressure finger (10) so that the top of the upper pressure finger (10) lies in the plane surface of the laser beam focus (13),
e) and the lower pressure finger (20) can be moved against the upper pressure finger (10).

2. System according to claim 1, whereas the pressure fingers (10, 20) serve as limiting elements for the limitation of the distance between the workpieces (14, 15).

3. System according to claim 1, whereas the multiple sheet metal connection shows the geometry of a flange.

4. System according to claims 1 to 3, whereas the position of the pressure fingers (10, 20) to each other can be set by means of distance or adjustment elements.

5. System according to claims 1 to 4, whereas the pressure fingers can be positioned and fixed in a preselectable distance to each other.

6. System according to one or more of the foregoing claims, whereas at least one force meter measures the pressures of the pressure fingers (10, 20) at the respective outer workpiece surfaces and the electronics permanently compare the measured pressures with a predefined theoretical pressure, whereas at least one pressure extends the distance between the pressure fingers (10, 20) when reaching the predefined theoretical pressure by the tolerance height.

7. System according to one or more of the foregoing claims, whereas force meters measure the pressures of the pressure fingers (10, 20) at the respective outer workpiece surfaces and keep the pressure fingers in a constant force ratio and adjust them by means of the upper linear drive, if necessary.

8. System according to one or more of the foregoing claims, whereas the holding elements (18, 19) of the pressure fingers (10, 20) are arranged in such a way that the beam path of the laser is not hidden.

9. System according to one or more of the foregoing claims, whereas the material of the top of the pressure fingers (10, 20) is hard metal or ceramics or a natural mineral.

10. System according to one or more of the foregoing claims, whereas the holder (19) of the lower pressure finger (20) can be exchanged by means of a tongue and groove cutting site at the lower drive unit (12) by means of which the lower pressure finger (20) is moveable and controllable relatively to the upper pressure finger (10).

11. System according to one or more of the foregoing claims, whereas the wear and tear elements can be exchanged without new adjustment of the laser machining optics (16).

12. Process for the treatment of a workpiece, especially a multiple sheet metal connection, using a system consisting of a laser machining optics for the treatment of a workpiece, especially a multiple sheet metal connection, upper and lower pressure finger (10, 20), whereas the upper pressure finger (10) with laser machining optics (16) is connected with a linear unit (11), consisting of linear guiding and linear drive and the lower pressure finger (20) is flexibly mounted and driven by means of a lower drive unit (12) and the direction of movement of a drive unit (12) takes place either linearly in the direction of the steel axis or on the circular orbit, **characterised in that** the laser machining optics (16) is coupled firmly with the upper pressure finger (10) and the lower pressure finger (20) is attached to the laser machining optics (16), whereas the laser machining optics (16) with the upper pressure finger (10) and the linear unit (11) as well as with the lower pressure finger (20) and the lower pressure unit (12) can be connected via the linear unit (11) with a guiding machine, especially a robot arm, comprising the process steps that
a) the laser machining optics is positioned with the upper pressure finger on the workpiece during the treatment process, whereas the lower drive unit (12) is completely extended so that there is a maximum distance between the upper and the lower pressure finger and
b) afterwards the lower drive unit (12) is retracted, whereas the lower pressure finger (20) is driven in the direction of the upper pressure finger (10) until a preselectable position in relation to the upper pressure finger is reached,
c) and the components to be welded (14, 15) are kept in a desired position and finally
d) the welding process is started, whereas the pressure finger (10, 20) is led parallely to the outer workpiece surfaces with the welding point welding the workpieces (14, 15) and is thus kept in the same spatial proximity with regard to the moving welding point,
e) and the focus (13) of the laser is adjusted to the top of the upper pressure finger (10) so that the top of the upper pressure finger (10) lies in the lies in the plane surface of the laser beam focus (13),
f) and the lower pressure finger (20) can be moved against the upper pressure finger (10).

13. Process according to claim 12,
• whereas the pressure fingers serve as limiting elements, limiting the distance between the workpieces superimposed upon each other, and
• whereas the limiting elements limit the respective outer workpieces and the distance between the limiting elements corresponds to the total distance (= sum of the workpiece strengths plus tolerance distances).

14. Process according to claim 12 or 13, whereas, after the components have been pressed together, the distance of the pressure fingers is extended by the tolerance height to the total distance before the welding process is started.

15. Process according to claim 14, whereas the tolerance height is the sum of the corresponding workpiece distances between the workpieces, whereas the corresponding workpiece distances range between 0.05 mm and 0.3 mm.

16. Process according to one or more of the foregoing claims, whereas the workpieces (14, 15) are additionally heated up locally by means of an external heat source near the welding point.

## Revendications

1. Système composé d'une optique d'usinage au laser pour l'usinage d'une pièce, en particulier d'une pièce composée de plusieurs tôles, d'un doigt de pression supérieur et inférieur (10, 20), le doigt de pression supérieur (10) avec optique d'usinage au laser (16) étant relié à une unité linéaire (11) composée d'un guidage linéaire et d'un entraînement linéaire, et le doigt de pression inférieur (20) étant mobile et étant entraîné par une unité d'entraînement inférieure (12), le sens de mouvement d'une unité d'entraînement (12) étant soit linéaire en direction de l'axe de rayonnement, soit circulaire ; système **caractérisé en ce que** :
a) l'optique d'usinage au laser (16) est accouplée inséparablement au doigt de pression supérieur (10) et que le doigt de pression inférieur (20) est fixé sur l'optique d'usinage au laser (16) ;
b) l'optique d'usinage au laser (16), plus précisément son doigt de pression supérieur (10) et l'unité linéaire (11) et son doigt de pression inférieur (20) et l'unité d'entraînement inférieure (12), pouvant être raccordée sur une machine de guidage et notamment sur un bras robotisé via l'unité linéaire (11) ;
c) les doigts de pression (10, 20) avec le point de soudure connectant les pièces à usiner (14, 15) étant entraînés en parallèle avec les surfaces extérieures des pièces à usiner ;
d) le foyer (13) du laser étant orienté sur la pointe du doigt de pression supérieur (10) de sorte que la pointe du doigt de pression supérieur (10) se situe dans le plan du foyer du faisceau laser (13) ;
e) le doigt de pression inférieur (20) étant mobile par rapport au doigt de pression supérieur (10).

2. Système selon la revendication 1, les doigts de pression (10, 20) servant d'éléments de délimitation pour délimiter la distance entre les pièces à usiner (14, 15).

3. Système selon la revendication 1, la pièce composée de plusieurs tôles ayant la géométrie d'une bride.

4. Système selon les revendications 1 à 3, l'orientation des doigts de pression (10, 20) l'un par rapport à l'autre pouvant être réglée via des éléments d'écartement ou de réglage.

5. Système selon les revendications 1 à 4, les doigts de pression pouvant être positionnés et fixés l'un par rapport à l'autre dans une distance définissable.

6. Système selon l'une ou plusieurs des revendications susmentionnées, au moins un dynamomètre mesurant les forces de pression des doigts de pression (10, 20) qui agissent sur la surface extérieure respective de la pièce à usiner et un système électronique comparant constamment les forces de pression mesurées avec une force de pression de consigne déterminée, au moins un entraînement augmentant la distance entre les doigts de pression (10, 20) de la hauteur de tolérance dès que la force de pression de consigne déterminée est atteinte.

7. Système selon l'une ou plusieurs des revendications susmentionnées, des dynamomètres mesurant les forces de pression qu'exercent les doigts de pression (10, 20) sur les surfaces extérieures respectives de la pièce à usiner, maintenant les doigts de pression dans un rapport de force constant et corrigeant ce rapport le cas échéant à l'aide de l'entraînement linéaire supérieur.

8. Système selon l'une ou plusieurs des revendications susmentionnées, les éléments de maintien (18, 19) des doigts de pression (10, 20) étant agencés de sorte que le faisceau du laser n'est pas couvert.

9. Système selon l'une ou plusieurs des revendications susmentionnées, le matériau de la pointe des doigts de pression (10, 20) étant du métal dur, de la céramique ou un autre minéral naturellement dur.

10. Système selon l'une ou plusieurs des revendications susmentionnées, le support (19) du doigt de pression inférieur (20) pouvant être remplacé grâce à une interface rainure-languette sur l'unité d'entraînement inférieure (12) qui permet de déplacer et de commander le doigt de pression inférieur (20) par rapport au doigt de pression supérieur (10).

11. Système selon l'une ou plusieurs des revendications susmentionnées, les pièces d'usure pouvant être remplacées sans rajustement de l'optique d'usinage au laser (16).

12. Procédé d'usinage d'une pièce à usiner, en particulier d'une pièce composée de plusieurs tôles, en utilisant un système composé d'une optique d'usinage au laser pour l'usinage de pièces à usiner, en particulier d'une pièce composée de plusieurs tôles, d'un doigt de pression supérieur et inférieur (10, 20), le doigt de pression supérieur (10) avec optique d'usinage au laser (16) étant raccordé sur une unité linéaire (11) composée d'un guidage linéaire et d'un entraînement linéaire, et le doigt de pression inférieur (20) étant mobile et étant entraîné via une unité d'entraînement inférieure (12) et le sens d'entraînement d'une unité d'entraînement (12) étant soit linéaire dans le sens de l'axe de rayonnement, soit circulaire. Système **caractérisé en ce que** l'optique d'usinage au laser (16) est accouplée inséparablement au doigt de pression supérieur (10) et que le doigt de pression inférieur (20) est fixé sur l'optique d'usinage au laser (16), l'optique d'usinage au laser (16), plus précisément son doigt de pression supérieur (10) et l'unité linéaire (11) et son doigt de pression inférieur (20) et l'unité d'entraînement inférieure (12), pouvant être raccordée sur une machine de guidage et notamment sur un bras robotisé via l'unité linéaire (11) ; système **caractérisé par le fait que** :
a) pendant le processus d'usinage, l'optique d'usinage au laser est positionnée sur la pièce à usiner à l'aide du doigt de pression supérieur, l'unité d'entraînement inférieure (12) étant sortie complètement afin d'assurer une distance maximale entre les doigts de pression supérieur et inférieur et que,
b) ensuite, l'unité d'entraînement inférieure (12) est rentrée, le doigt de pression inférieur (20) étant déplacé vers le doit de pression supérieur (10) jusqu'à ce qu'il arrive à une position définissable par rapport au doigt de pression supérieur,
c) les pièces à souder (14, 15) étant ainsi maintenues l'une par rapport à l'autre dans une position désirée, et que, finalement,
d) le soudage est lancé, les doigts de pression (10, 20) avec le point de soudure connectant les pièces à usiner (14, 15) étant entraînés en parallèle avec les surfaces extérieures des pièces à usiner et étant ainsi maintenus dans une proximité constante par rapport au point de soudure qui se déplace, et que
e) le foyer (13) du laser est réglé sur la pointe du doigt de pression supérieur (10) de sorte que la pointe du doigt de pression supérieur (10) se situe dans le plan du foyer du faisceau laser (13) et que
f) le doigt de pression inférieur (20) est mobile par rapport au doigt de pression supérieur (10).

13. Procédé selon la revendication 12, **caractérisé en ce que**
• les doigts de pression servent d'éléments de délimitation qui délimitent la distance entre les pièces à usiner situées l'une au-dessus de l'autre et que
• les éléments de délimitation délimitent les pièces à usiner respectivement extérieures et la distance entre les éléments de délimitation est égale à la distance totale (= somme des épaisseurs des pièces à usiner et des distances de tolérance).

14. Procédé selon la revendication 12 ou 13, **caractérisé en ce que** la distance entre les doigts de pression est majorée de la hauteur de tolérance après la compression des pièces à usiner pour atteindre la distance totale avant de lancer le soudage.

15. Procédé selon la revendication 14, **caractérisé en ce que** la hauteur de tolérance est le total des distances respectives entre les pièces à usiner, les distances respectives étant comprises entre 0,05 mm et 0,3 mm.

16. Procédé selon l'une ou plusieurs des revendications susmentionnées, les pièces à usiner (14, 15) étant échauffées supplémentairement localement par une source de chaleur externe à proximité du point de soudure.
